# EUROPÄISCHE PATENTSCHRIFT

(11) **EP 0 831 213 B1**
(45) Veröffentlichungstag und Bekanntmachung des Hinweises auf die Patenterteilung: **19.05.1999**
(21) Anmeldenummer: 97115163.4
(22) Anmeldetag: 02.09.1997
(51) Int. Cl.: F02B 23/10

(54) **Direkteinspritzende Brennkraftmaschine**
Direct injection type combustion engine
Moteur à combustion à injection directe

(30) Priorität: 18.09.1996 DE 19637993
(43) Veröffentlichungstag der Anmeldung: 25.03.1998
(73) Patentinhaber: DaimlerChrysler AG, 70567 Stuttgart (DE)
(72) Erfinder: Bubeck, Günther, 73614 Schorndorf (DE); Kühn, Michael, 73061 Ebersbach (DE)

(56) Entgegenhaltungen:
- WO-A-84/02744
- DE-A- 3 207 179
- DE-A- 4 324 642
- US-A- 2 422 610

## Beschreibung

Die Erfindung betrifft eine direkteinspritzende Brennkraftmaschine, welche in weiten Kennfeldbereichen eine Schichtverbrennung vorsieht, nach dem Oberbegriff des Anspruches 1.

Die DE 43 24 642 A1 beschreibt eine derartige Brennkraftmaschine, welche einen Brennraum aufweist, der von einem im Zylinder der Brennkraftmaschine angeordneten Kolben und der Innenwand eines Zylinderkopfes begrenzt ist. Eine Einspritzdüse eines Injektors spritzt Kraftstoff etwa kegelförmig in den Brennraum ein, wo ein zündfähiges Kraftstoff/Luft-Gemisch mit der dem Brennraum zugeführten Verbrennungsluft gebildet ist. Das Gemisch wird von einer Zündkerze gezündet, zwischen deren in den kraftstoffhaltigen Kegelstrahl einragenden Elektroden ein Zündfunken überspringt. Die Elektroden sind in der Nähe der Einspritzdüse angeordnet, so daß ein kraftstoffreiches, leicht entflammbares Gemisch zur Zündung kommt, wobei abhängig von der Motorbelastung eine Schichtverbrennung angestrebt ist, bei der durch Druck- und Temperaturanstieg infolge der Zündung des kraftstoffreichen Gemischanteiles die kraftstoffärmeren Gemischanteile im übrigen Teil des Brennraumes verbrannt werden. Die Elektroden sind einer unmittelbaren Benetzung durch den eingespritzten Kraftstoff ausgesetzt, so daß sich mit zunehmender Betriebszeit die Ausbildung eines Zündfunkens verhindernder Ruß absetzen kann. Überdies müssen die Elektroden sehr lang ausgeführt sein, um eine Gemischzündung in der Umgebung der Einspritzdüse zu ermöglichen, wobei abhängig von der Motorlast entweder durch die Aufheizung der Elektroden im Bereich des eingespritzten Kraftstoffes die Klopfneigung erhöht oder durch die Abkühlung der Elektroden infolge des Kontaktes mit dem Kraftstoff die Absetzung von Ruß begünstigt wird.

Der Erfindung liegt daher die Aufgabe zugrunde, die direkteinspritzende Brennkraftmaschine derart weiterzubilden, daß über einen langen Zeitraum ein optimales Betriebsverhalten der Brennkraftmaschine erzielt ist.

Diese Aufgabe wird erfindungsgemäß mit den Merkmalen des Patentanspruches 1 gelöst.

Um die Gefahr des Verrußens der Elektroden zu reduzieren, ist mindestens der in den Brennraum einragende Teil der Zündkerze von einer Zündkerzenhülse umgeben. Dadurch ist ein direkter Kontakt der Elektroden mit dem eingespritzten Kraftstoff des Kegelstrahls vermieden. Die Zündkerzenhülse ist vorteilhaft an ihrem in den Brennraum ragenden Endabschnitt offen, so daß beim Verdichtungshub des Kolbens das Kraftstoff/Luft-Gemisch aus dem Brennraum axial in die Hülse gedrückt wird. Durchsticht die Zündkerzenhülse im Schichtladebetrieb der Brennkraftmaschine einen Gemischmantel des Kegelstrahls, so kommt in der Zündkerzenhülse leicht entflammbares, kraftstoffreiches Gemisch aus dem Inneren des Kegelstrahls zur Zündung, wo im Vergleich zum Gemischmantel relativ geringe Unterschiede im Kraftstoffgehalt des Gemisches vorliegen. Vorteilhaft ist im Endabschnitt der Zündkerzenhülse eine Zündkammer ausgebildet, in die die Elektroden der Zündkerze geometrisch in Überdeckung mit dem Kegelstrahl liegend einragen. Die Zündkammer fixiert den beim Verdichtungshub des Kolbens aus dem Brennraum eingedrückten Gemischanteil, so daß der Zündkerze ein kraftstoffreiches Gemisch zur Zündung weitgehend stabil bereitgestellt ist. Die Folge ist ein gleichmäßiges Zündverhalten und Durchbrennen der Brennraumladung. Die Initialzündung der Zündkammerladung entflammt den Gemischanteil im Brennraum im Inneren des Kegelstrahls, wo kraftstoffreiches Gemisch mit hoher Abbrenngeschwindigkeit durchbrennt und die kraftstoffarme Schicht im Gemischmantel, welche partiell unterschiedliche Kraftstoffkonzentrationen aufweist, unter Druck- und Temperaturanstieg auf breiter Front entzündet.

In einer Weiterbildung der Erfindung ist in die Zündkerzenhülse mindestens eine sich in Umfangsrichtung der Zündkerzenhülse erstreckende Öffnung eingebracht. Diese fluidische Verbindung der Zündkammer mit dem Brennraum entlüftet die Zündkammer beim Ladungswechsel, wobei das von der Kolbenkraft beim Verdichtungshub in die Zündkammer gedrückte, frische Gemisch die Abgase der Initialzündung durch die Öffnung ausschiebt. Bevorzugt ist die Öffnung etwa auf Höhe der Außenseite des bei der Kraftstoffeinspritzung erzeugten Gemischmantels angeordnet. Somit erfolgt die Zündung des Hauptgemischanteiles im Brennraum gleichzeitig im Inneren des Gemischmantels und an der Außenseite des Gemischmantels, wodurch die Abbrenngeschwindigkeit gesteigert und die Gefahr der Rußabsetzung auf den Elektroden weiter verringert wird. Darüber hinaus ermöglicht die doppelte Zündung des Kegelstrahles und das damit verbundene Abbrennverhalten der Brennraumladung einen späteren Einspritz- und Zündzeitpunkt im Verdichtungstakt der Brennkraftmaschine, wodurch im Schichtladungsbetrieb eine stabile Schichtung sowie ein verringerter Kraftstoffverbrauch und verringerte Schadstoffemissionen, insbesondere NOx, erzielt sind. Liegt die Öffnung der Kegelstrahldüse diametral gegenüber, so ist sichergestellt, daß Gemischanteile im Gemischmantel mit besonders geringem Kraftstoffgehalt im durch die Zündkerzenhülse abgeschirmten Kernschattenbereich des Kegelstrahls durch einen die Öffnung durchdringenden Flammstrahl aus der Zündkammer eine Initialzündung erfahren. Es wird als vorteilhaft gesehen, mehrere axial gleich gelegene Öffnungen in der Zündkerzenhülse vorzusehen, um den Gemischmantel auf seiner Außenseite auf einer größeren Fläche zu entzünden, und somit die Abbrenngeschwindigkeit der Brennraumladung weiterhin zu steigern.

Durchdringt der Injektor mit einer koaxial zum Kolben verlaufenden Längsachse den Zylinderkopf, wobei die Kegelstrahldüse in einer zentralen Position im Brennraum angeordnet ist, ist ein Kontakt des Gemisches mit der Innenwand des Zylinderkopfes und somit eine Abkühlung des Gemisches weitgehend vermieden. Die erreichte, höhere Betriebstemperatur der Brennkraftmaschine erhöht die Zündwilligkeit insbesondere der kraftstoffarmen Gemischanteile, so daß die Qualität der Schichtverbrennung im Niedriglastbereich der Brennkraftmaschine und das Durchbrennen eines weitgehend homogenen Kraftstoff/Luft-Gemisches im Hochlastbereich der Brennkraftmaschine verbessert ist. Vorteilhaft schneiden sich die Längsachse des Injektors und die Hülsenachse der Zündkerzenhülse, um die Entnahme von kraftstoffreichem Gemisch aus dem Inneren des Kegelstrahls in die Zündkammer zu gewährleisten.

Ein weiterer Vorteil wird darin gesehen, die Zündkerzenhülse auf der dem Zylinderkopf zugewandten Seite mit einem Innengewinde auszugestalten, in das ein Gewindeschaft der Zündkerze einschraubbar ist. Die im Betrieb der Brennkraftmaschine vorgesehene Einbaulage der Zündkerze ist festgelegt durch eine Anschlagkante der Zündkerzenhülse, an dem ein Schraubenkopf des Gewindeschaftes einer eingeschraubten Zündkerze zur Anlage gebracht ist. Als Vorteil wird auch gesehen, daß die Zündkerzenhülse den Zylinderkopf durchsetzt und etwa im Bereich der Anschlagkante des Zündkerzenkopfes nach außen abgesetzt ist, so daß die Einbaulage der Zündkerzenhülse im Zylinderkopf axial definiert ist.

Bevorzugt ist die Zündkerzenhülse zylindrisch geformt, wodurch ein Minimum an Oberfläche der Zündkerzenhülse und somit eine minimale Störung des Schichtladungsaufbaus infolge einer Abschirmung des Kegelstrahls durch die Zündkerzenhülse ermöglicht ist.

In einer weiteren vorteilhaften Ausgestaltung der Erfindung ist der Brennraum kegelförmig ausgestaltet, wodurch die Gemischbildung der Verbrennungsluft mit dem kegelig eingespritzten Kraftstoff bei einer stabilen, kegeligen Ladungsschichtung beschleunigt ist. Vorteilhaft verläuft die Innenwand des Zylinderkopfes parallel zur Außenseite des Gemischmantels, wodurch in einem kompakten Brennraum abhängig von der Motorlast Gemische zur Schichtverbrennung oder im Hochlastbetrieb der Brennkraftmaschine zur homogenen Verbrennung verbessert bildbar sind.

Der Injektor kann vorteilhaft in seinem die Kegelstrahldüse aufweisenden Teil in einer Düsenaufnahme gelagert sein, wodurch bei genauer Positionierung der Kegelstrahldüse im Brennraum ein gegebenenfalls notwendiger Austausch des Injektors zu einem späteren Betriebszeitpunkt ohne aufwendige Korrekturen der Einspritzparameter erleichtert ist.

Ein Ausführungsbeispiel der Erfindung ist nachstehend anhand der Zeichnung näher beschrieben. Es zeigen:
- Fig. 1: eine geschnittene Teilansicht durch einen Zylinderkopf und einen Brennraum einer Brennkraftmaschine,
- Fig. 2: einen Schnitt entlang der Linie II-II in Fig. 1,
- Fig. 3: eine schematische Darstellung eines Gemisch enthaltenden Brennraumes in einer Ansicht gemäß Fig. 2.

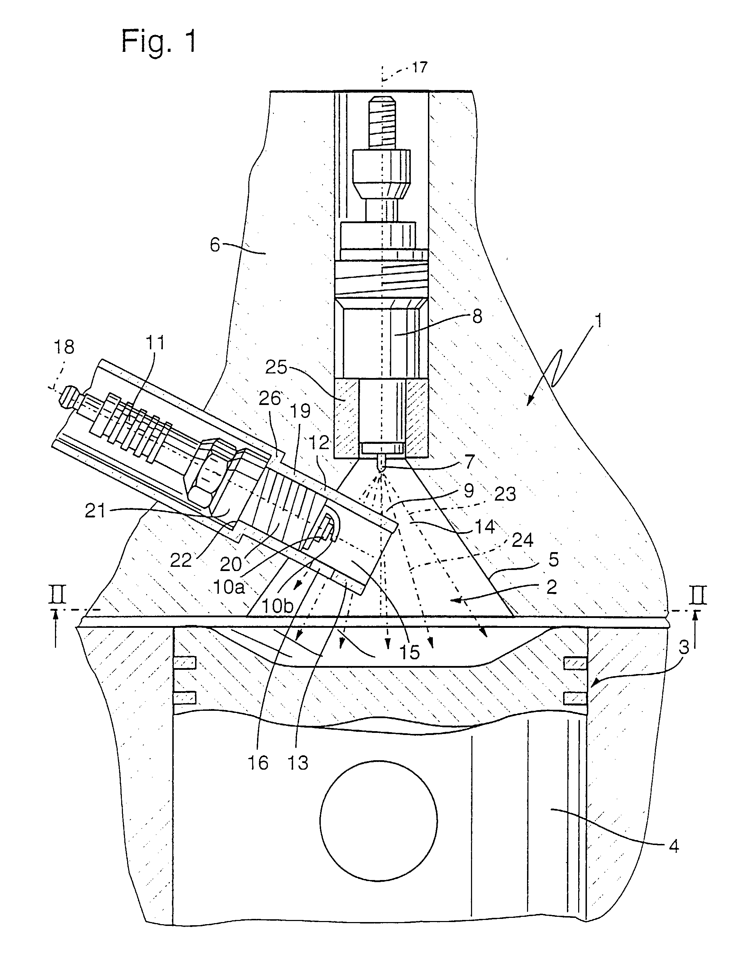

Das in Fig. 1 dargestellte Arbeitselement 1 einer direkteinspritzenden Brennkraftmaschine weist einen Zylinder 3 auf, in dem ein Kolben 4 hubbeweglich geführt ist. Der Zylinder 3 ist von einem Zylinderkopf 6 abgedeckt, dessen Innenwand 5 und der Kolben 4 einen sich zum Kolben kegelförmig erweiterten Brennraum 2 begrenzen. Im Zylinderkopf 6 ist ein Injektor 8 angeordnet, der an seinem brennraumseitigen Ende in einer Düsenaufnahme 25 gelagert ist, wobei die Längsachse 17 des Injektors 8 koaxial zur Bewegungsrichtung des Kolbens 4 verläuft. Der Injektor 8 umfaßt eine Kegelstrahldüse 7, welche in einer zentralen Position im oberen Teil des Brennraums 2 liegt und am Ende jedes Verdichtungshubes des Kolbens 4 Kraftstoff in einem Kegelstrahl 9 in den Brennraum 2 einspritzt, dessen Gemischmantel 14 an seiner Außenseite 23 etwa parallel zur Innenwand 5 verläuft.

Der Kegelstrahl 9 besteht aus einem zündfähigen Kraftstoff/Luft-Gemisch, das aus dem eingespritzten Kraftstoff und dem Brennraum zugeführter Verbrennungsluft gebildet ist. Abhängig von der Motorlast ist ein Schichtladebetrieb mit Qualitätsregelung vorgesehen, wobei der Kegelstrahl 9 kraftstoffreiches Gemisch und der Gemischmantel 14 kraftstoffärmeres Gemisch führt. Die Zündung des Kraftstoff/Luft-Gemisches ist durch eine Zündkerze 11 vorgesehen, welche zum Schutz vor Verrußung infolge einer Benetzung durch den eingespritzten Kraftstoff in einer Zündkerzenhülse 12 aufgenommen ist. Die Zündkerzenhülse 12 durchsticht den Gemischmantel 14, so daß in der Zündkammer 15 der Zündkerzenhülse 12 ein leicht entflammbarer, kraftstoffreicher Gemischanteil aus dem Inneren des Kegelstrahls 9, welcher beim Verdichtungshub des Kolbens 4 in die durch eine Öffnung 16 entlüftete Zündkammer 15 gedrückt ist, zur Initialzündung der Schichtladung im Brennraum 2 bereit steht.

Der in der Zündkammer 12 befindliche Gemischanteil wird durch einen zwischen den Elektroden 10a, 10b der Zündkerze 11 überspringenden Zündfunken entflammt und zündet das Gemisch im Kegelstrahl 9 und den Gemischmantel 14 an seiner Innenseite 24 an. Die Öffnung 16 in der Zündkerzenhülse 12 zur fluidischen Verbindung der Zündkammer 15 mit dem Brennraum 2 ist auf Höhe des Gemischmantels 14 benachbart dessen Außenseite 23 abseits der Kegelstrahldüse 7 angeordnet. Auf diese Weise wird der Gemischmantel 14 etwa gleichzeitig zur Zündung der Innenseite 24 an der Außenseite 23 gezündet. Der Gemischmantel 14 führt Kraftstoffmagergemische unterschiedlicher Kraftstoffgehalte, wobei insbesondere im Kernschattenbereich des durch die Zündkerzenhülse 12 abgeschirmten Kegelstrahls 9 geringe Kraftstoffgehalte im Gemisch vorliegen, die durch die doppelseitige Anzündung rasch durchbrennen.

Die zylindrische Zündkerzenhülse durchsetzt den Zylinderkopf 6 und ist derart angeordnet, daß die Hülsenachse 18 der Zündkerzenhülse 12 die Längsachse 17 des Injektors 8, auf der auch die Kegelstrahldüse 7 liegt, schneidet. Die Zündkerzenhülse weist zylinderkopfseitig ein Innengewinde 19 auf, in das ein Gewindeschaft 20 der Zündkerze li bis zur Anlage eines Schraubenkopfes 21 des Gewindeschaftes an einer Anschlagkante 22 der Zündkerzenhülse 12 eingeschraubt ist. Die in die Zündkammer 15 einragenden Elektroden 10a, 10b sind kurz ausgeführt, da die Zündkerzenhülse 12 das aus dem Kegelstrahl 9 entnommene, leicht entflammbare Gemisch in der Nähe der Zündquelle in der Zündkammer 15 fixiert. Etwa im Bereich der Anschlagkante 22 ist die Zündkerzenhülse 12 nach außen abgesetzt, so daß ein Absatz 26 als Widerlager gegen ein unerwünschtes Einwandern der Zündkerzenhülse 12 in den Brennraum 2 gebildet ist.

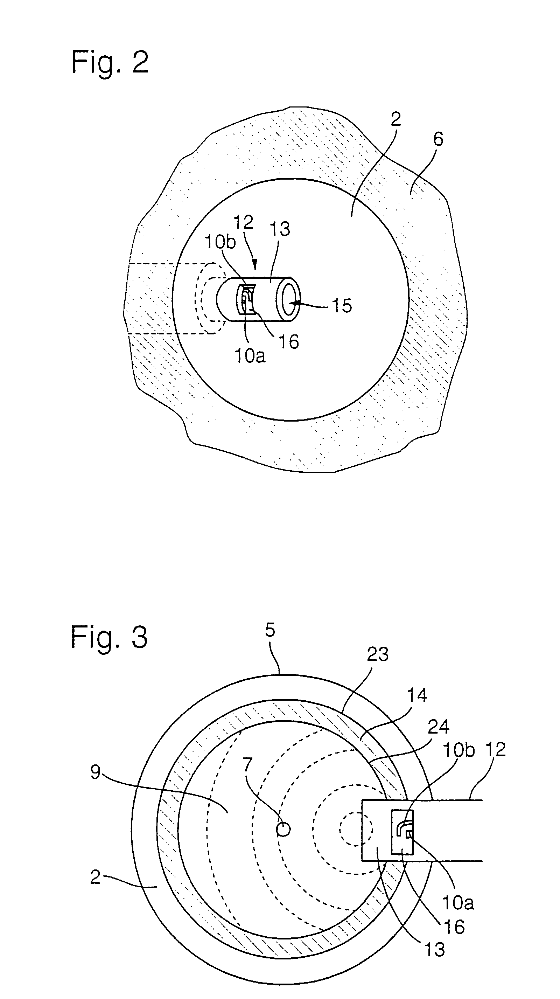

In Fig. 2 ist eine Zündkerzenhülse 12 dargestellt, welche mit ihrem Endabschnitt 13 aus dem Zylinderkopf 6 in den kegelförmigen Brennraum 2 einer Brennkraftmaschine einragt. Die Zündkerzenhülse 12 schließt eine Zündkerze ein, deren Elektroden 10a, 10b in eine Zündkammer 15 im Endabschnitt 13 der Zündkerzenhülse 12 geführt sind. Die Zündkammer 15 ist durch eine Öffnung 16, welche sich in Umfangsrichtung in der Zündkerzenhülse erstreckt, fluidisch mit dem Brennraum 2 verbunden. Ein zwischen den Elektroden 10a, 10b überspringender Zündfunke entzündet das kraftstoffreiche Gemisch aus dem Inneren eines in den Brennraum 2 eingespritzten Kegelstrahls. Diese Initialzündung in der Zündkammer 15 der den Gemischmantel des Kegelstrahls durchstechenden Zündkerzenhülse 12 entzündet die Ladung des Brennraums 2 an zwei Seiten, nämlich im Inneren des Kegelstrahls benachbart der Innenseite des Gemischmantels und an der Außenseite des Gemischmantels.

Fig. 3 stellt schematisch den Brennraum 2 einer Brennkraftmaschine dar, welcher von der Innenwand 5 des Zylinderkopfes begrenzt ist. Im Schichtladebetrieb der Brennkraftmaschine spritzt eine Kegelstrahldüse 7 Kraftstoff am Ende des Verdichtungshubes des Kolbens in den Brennraum 2 ein. Dabei ist mit der dem Brennraum 2 zugeführten Verbrennungsluft ein zündfähiges Kraftstoff/Luft-Gemisch gebildet, welches gemäß der Schichtladung im Inneren des Kegelstrahls 9 kraftstoffreich bzw. fett ist und im Gemischmantel 14 kraftstoffarm bzw. mager ist. Die Zündkerzenhülse 12 durchsticht den Gemischmantel 14, wodurch beim Verdichtungshub des Kolbens fettes Gemisch aus dem Inneren des Kegelstrahls 9 in die Zündkammer im zum Kegelstrahl 9 offenen Endabschnitt 13 der Zündkerzenhülse 12 unter gleichzeitiger Entlüftung der Zündkammer durch die sich in Umfangsrichtung der Zündkerzenhülse 12 erstreckende Öffnung 16 eingedrückt wird. Springt zwischen den Elektroden 10a, 10b einer Zündkerze in der Zündkammer ein Zündfunke über, so wird der Gemischanteil in der Zündkammer entflammt und zündet den Gemischanteil in dem Brennraum 2. Die Flammausbreitung im Kegelstrahl 9 ist strichliniert dargestellt und verläuft in einer sphärischen Flammfront. von der Initialzündung benachbart der Innenseite 24 des Gemischmantels 14 in Richtung der der Zündquelle gegenüberliegenden Seite des Gemischmantels 14. Etwa gleichzeitig zu der Zündung an der Innenseite 24 des Gemischmantels 14 entzündet die Zündflamme der Zündkammer den Gemischmantel 14 durch die Öffnung 16 an der Außenseite 23.

Diese zweiseitige Anzündung des Kegelstrahls 9 bzw. des Gemischmantels 14 steigert die Abbrenngeschwindigkeit, so daß der Einspritz- und Zündzeitpunkt am Ende des Verdichtungshubes des Kolbens spät gewählt sein kann. Im Schichtladebetrieb der Brennkraftmaschine ist somit eine stabilere Schichtung gegeben und infolge eines reduzierten Kraftstoffbedarfs der Brennkraftmaschine im Verhältnis zum großen Luftüberschuß eine Reduzierung der Schadstoffemissionen, insbesondere Stickoxide (NOx) und Kohlenmonoxid (CO) erzielt, während im Hochlastbereich der Brennkraftmaschine eine homogene Verbrennung erfolgt.

## Patentansprüche

1. Direkteinspritzende Brennkraftmaschine, welche in jedem Arbeitselement (1) einen Brennraum (2) aufweist, welcher von einem innerhalb eines Zylinders (3) hubbeweglich angeordneten Kolben (4) und einer Innenwand (5) eines Zylinderkopfes (6) begrenzt ist, mit einer Kegelstrahldüse (7) eines Injektors (8) zum kegelförmigen Einspritzen von Kraftstoff in den Brennraum (2), wobei mit dem Brennraum (2) zugeführter Verbrennungsluft ein zündfähiges Kraftstoff/Luftgemisch gebildet ist, welches durch einen Zündfunken zu zünden ist, der zwischen in den kraftstoffhaltigen Kegelstrahl (9) einragenden Elektroden (10a, 10b) einer Zündkerze (11) überspringt, dadurch gekennzeichnet, daß mindestens der in den Brennraum (2) einragende Teil der Zündkerze (11) von einer Zündkerzenhülse (12) umgeben ist, wobei im Endabschnitt (13) der Zündkerzenhülse (12) eine Zündkammer (15) ausgebildet ist, in die die Elektroden (10a, 10b) der Zündkerze (11) einragen.

2. Brennkraftmaschine nach Anspruch 1,
dadurch gekennzeichnet, daß die Zündkerzenhülse (12) an ihrem in den Brennraum (2) ragenden Endabschnitt (13) offen ist.

3. Brennkraftmaschine nach Anspruch 1 oder 2,
dadurch gekennzeichnet, daß die Zündkerzenhülse (12) einen Gemischmantel (14) des Kegelstrahls (9) durchsticht.

4. Brennkraftmaschine nach einem der Ansprüche 1 bis 3,
dadurch gekennzeichnet, daß in die Zündkerzenhülse (12) mindestens eine sich in Umfangsrichtung der Zündkerzenhülse (12) erstreckende Öffnung (16) eingebracht ist, welche die Zündkammer (15) mit dem Brennraum (2) fluidisch verbindet.

5. Brennkraftmaschine nach Anspruch 4,
dadurch gekennzeichnet, daß die Öffnung (16) etwa auf Höhe einer Außenseite (23) des bei der Kraftstoffeinspritzung erzeugten Gemischmantels (14) liegt.

6. Brennkraftmaschine nach Anspruch 4 oder 5,
dadurch gekennzeichnet, daß die Öffnung (16) der Kegelstrahldüse (9) diametral gegenüberliegend angeordnet ist.

7. Brennkraftmaschine nach einem der Ansprüche 4 bis 6,
dadurch gekennzeichnet, daß mehrere axial gleich gelegene Öffnungen (16) vorgesehen sind.

8. Brennkraftmaschine nach einem der vorhergehenden Ansprüche,
dadurch gekennzeichnet, daß die Kegelstrahldüse (7) in einer zentralen Position im Brennraum angeordnet ist und der Injektor (8) den Zylinderkopf (6) durchsetzt, wobei eine Längsachse (17) des Injektors (8) koaxial zum Kolben (4) verläuft.

9. Brennkraftmaschine nach Anspruch 8,
dadurch gekennzeichnet, daß die Längsachse (17) des Injektors (8) und eine Hülsenachse (18) der Zündkerzenhülse (12) sich schneiden.

10. Brennkraftmaschine nach einem der vorhergehenden Ansprüche,
dadurch gekennzeichnet, daß die Zündkerzenhülse (12) zylinderkopfseitig ein Innengewinde (19) aufweist, in das ein Gewindeteil (20) der Zündkerze (11) bis zur Anlage eines Zündkerzenkopfes (21) an einer Anschlagkante (22) der Zündkerzenhülse (12) einschraubbar ist.

11. Brennkraftmaschine nach Anspruch 10,
dadurch gekennzeichnet, daß die Zündkerzenhülse (12) den Zylinderkopf (6) durchdringt und etwa im Bereich der Anschlagkante (22) nach außen abgesetzt ist.

12. Brennkraftmaschine nach Anspruch 11,
dadurch gekennzeichnet, daß die Zündkerzenhülse (12) zylindrisch geformt ist.

13. Brennkraftmaschine nach einem der vorhergehenden Ansprüche,
dadurch gekennzeichnet, daß der Brennraum (2) kegelförmig ausgestaltet ist.

14. Brennkraftmaschine nach Anspruch 13,
dadurch gekennzeichnet, daß die Innenwand (5) des Zylinderkopfes (6) parallel zur Außenseite (23) des Gemischmantels (14) verläuft.

15. Brennkraftmaschine nach einem der Ansprüche 8 bis 14,
dadurch gekennzeichnet, daß der Injektor (8) in seinem die Kegelstrahldüse (7) aufweisenden Teil in einer Düsenaufnahme (25) gelagert ist.

## Claims

1. Direct-injection combustion engine each working element (1) of which comprises a combustion chamber (2) bounded by a piston (4) positioned and reciprocating within a cylinder (3) and an inside wall (5) of a cylinder head (6), with a conical jet nozzle (7) of an injector (8) for the conical injection of fuel into the combustion chamber (2), whereby an ignitable fuel/air mixture is formed with the combustion air admitted to the combustion chamber (2), the said mixture being ignited by an ignition spark which is struck between the electrodes (10a, 10b) of a spark plug (11) which project into the conical jet (9) containing fuel,
**characterized in that**
at least the portion of the spark plug (11) which projects into the combustion chamber (2) is surrounded by a spark plug socket (12), such that an ignition chamber (15) is formed in the end section (13) of the spark plug socket (12), into which the electrodes (10a, 10b) of the spark plug (11) project.

2. Combustion engine according to Claim 1,
**characterized in that**
the spark plug socket (12) is open at its end section (13) which projects into the combustion chamber (2).

3. Combustion engine according to Claims 1 or 2,
**characterized in that**
the spark plug socket (12) projects into a mixture envelope (14) ofthe conical jet (9).

4. Combustion engine according to any of Claims 1 to 3,
**characterized in that**
in the spark plug socket (12) at least one opening (16) extending in the circumferential direction of the spark plug socket (12) is formed, which connects the ignition chamber (15) and the combustion chamber (2) in fluid communication.

5. Combustion engine according to Claim 4,
**characterized in that**
the opening (16) is approximately at the level of an outer side (23) of the mixture envelope (14) produced when fuel is injected.

6. Combustion engine according to Claims 4 or 5,
**characterized in that**
the opening (16) is positioned diametrically opposite the conical jet nozzle (9).

7. Combustion engine according to any of Claims 4 to 6,
**characterized in that**
several axially equally located openings (16) are provided.

8. Combustion engine according to any of the preceding claims,
**characterized in that**
the conical jet nozzle (7) is positioned centrally in the combustion chamber and the injector (8) passes through the cylinder head (6), such that a longitudinal axis (17) of the injector (8) extends coaxially with the piston (4).

9. Combustion engine according to Claim 8,
**characterized in that**
the longitudinal axis (17) of the injector (8) and a socket axis (18) of the spark plug socket (12) intersect one another.

10. Combustion engine according to any of the preceding claims,
**characterized in that**
the spark plug socket (12) has on the cylinder head side an internal thread (19) into which a threaded portion (20) of the spark plug (11) can be screwed until a spark plug head (21) comes up against a contact rim (22) of the spark plug socket (12).

11. Combustion engine according to Claim 10,
**characterized in that**
the spark plug socket (12) passes through the cylinder head (6) and is stepped outwards approximately in the area of the contact rim (22.

12. Combustion engine according to Claim 11,
**characterized in that**
the spark plug socket (12) is cylindrical.

13. Combustion engine according to any of the preceding claims,
**characterized in that**
the combustion chamber (2) is of conical shape.

14. Combustion engine according to Claim 13,
**characterized in that**
the inside wall (5) of the cylinder head (6) is parallel to the outside (23) of the mixture envelope (14).

15. Combustion engine according to any of Claims 8 to 14,
**characterized in that**
the portion of the injector (8) comprising the conical jet nozzle (7) is fitted into a nozzle mounting (25).

## Revendications

1. Moteur à combustion interne à injection directe qui présente, dans chaque élément travaillant (1), une chambre de combustion (2) qui est limitée par un piston (4) mobile en translation à l'intérieur d'un cylindre (3) et par une paroi intérieure (5) d'une culasse (6), avec une buse à jet conique (7) d'un injecteur (8) servant à injecter du carburant en jet conique dans la chambre de combustion (2), dans lequel il se forme, avec de l'air comburant acheminé à la chambre de combustion (2), un mélange carburant/air inflammable, qui doit être allumé au moyen d'une étincelle d'allumage qui éclate entre les électrodes (10a, 10b) d'une bougie d'allumage (11) engagées dans le jet conique (9) contenant du carburant, caractérisé en ce qu'au moins la partie de la bougie d'allumage (11) qui est engagée dans la chambre de combustion (2) est entourée par un manchon (12) de la bougie d'allumage, cependant que, dans le segment terminal (13) du manchon (12) de la bougie d'allumage, est formée une chambre d'allumage (15) dans laquelle les électrodes (10a, 10b) de la bougie d'allumage sont engagées.

2. Moteur à combustion interne selon la revendication 1, caractérisé en ce que le manchon (12) de la bougie d'allumage est ouvert à son segment terminal (13) engagé dans la chambre de combustion (2).

3. Moteur à combustion interne selon la revendication 1 ou 2,
caractérisé en ce que le manchon (12) de la bougie d'allumage transperce une enveloppe (14) du mélange du jet conique (9).

4. Moteur à combustion interne selon une des revendications 1 à 3,
caractérisé en ce que, dans le manchon (12) de la bougie d'allumage, est ménagée au moins une ouverture (16) qui s'étend dans la direction circonférentielle du manchon (12) de la bougie d'allumage, et qui relie fluidiquement la chambre d'allumage (15) à la chambre de combustion (2).

5. Moteur à combustion interne selon la revendication 4,
caractérisé en ce que l'ouverture (15) se trouve à peu près au niveau d'un côté extérieur (23) de l'enveloppe (14) du mélange qui est produite lors de l'injection de carburant.

6. Moteur à combustion inteme selon la revendication 4 ou 5,
caractérisé en ce que l'ouverture (16) est disposée en position diamétralement opposée à la buse à jet conique (9).

7. Moteur à combustion interne selon une des revendications 4 à 6,
caractérisé en ce qu'il est prévu plusieurs ouvertures (16) disposées identiquement en direction axiale.

8. Moteur à combustion interne selon une des revendications précédentes,
caractérisé en ce que la buse à jet conique (7) est disposée dans une position centrale dans la chambre de combustion et l'injecteur (8) traverse la culasse (6), un axe longitudinal (17) de l'injecteur (8) s'étendant coaxialement au piston (4).

9. Moteur à combustion interne selon la revendication 8,
caractérisé en ce que l'axe longitudinal (17) de l'injecteur (8) et un axe (18) du manchon (12) de la bougie d'allumage se coupent.

10. Moteur à combustion interne selon une des revendications précédentes,
caractérisé en ce que le manchon (12) de la bougie d'allumage présente, côté culasse, un filetage intérieur (19) dans lequel on peut visser une partie filetée (20) de la bougie d'allumage (11) jusqu'à ce qu'une tête (21) de la bougie d'allumage vienne en appui contre un bord de butée (22) du manchon (12) de la bougie d'allumage.

11. Moteur à combustion inteme selon la revendication 10,
caractérisé en ce que le manchon (12) de la bougie d'allumage traverse la culasse (6) et forme un épaulement vers l'extérieur à peu près dans la région du bord de butée (22).

12. Moteur à combustion inteme selon la revendication 11,
caractérisé en ce que le manchon (12) de la bougie d'allumage est de forme cylindrique.

13. Moteur à combustion inteme selon une des revendications précédentes, caractérisé en ce que la chambre de combustion (2) est de forme conique.

14. Moteur à combustion interne selon la revendication 13,
caractérisé en ce que la paroi intérieure (5) de la culasse (6) s'étend parallèlement au côté extérieur (23) de l'enveloppe (14) du mélange.

15. Moteur à combustion interne selon une des revendications 8 à 14,
caractérisé en ce que, dans sa partie qui présente la buse à jet conique (7), l'injecteur (8) est monté dans un logement de buse (25).
